# EUROPEAN PATENT APPLICATION

(11) **EP 3 572 461 A1**
(43) Date of publication of application: **27.11.2019**
(21) Application number: 18741193.9
(22) Date of filing: 15.01.2018
(51) Int. Cl.: C08L 23/16, B60J 10/15, B60S 1/38, C08K 3/36, C08K 5/14, C08K 9/06, C08L 83/04, C08L 83/05

(54) **POLYOLEFIN RUBBER COMPOSITION**

(30) Priority: 17.01.2017 JP 2017005969
(71) Applicant: Amaderus Holdings Co., Ltd., Kobe-shi, Hyogo 654-0026 (JP); Shin-Etsu Chemical Co., Ltd., Tokyo 100-0004 (JP)
(72) Inventor: MORI Naozumi, Kobe-shi Hyogo 654-0026 (JP); URATANI Takeshi, Kobe-shi Hyogo 654-0026 (JP); KISHIDA Hideki, Kobe-shi Hyogo 654-0026 (JP); YOSHIDA Masayuki, Annaka-shi Gunma 379-0224 (JP); IGARASHI Minoru, Annaka-shi Gunma 379-0224 (JP); TANAKA Masaki, Annaka-shi Gunma 379-0224 (JP); TAKAHATA Yoshimitsu, Osaka-shi Osaka 550-0002 (JP)
(74) Representative: Ter Meer Steinmeister & Partner
(86) International application number: PCT/JP2018/000821
(87) International publication number: WO 2018/135435

(57) **Abstract**

The present invention is a polyolefin rubber composition containing: 100 parts by mass of (A) an ethylene-α-olefin-unconjugated polyene random copolymer; 1-100 parts by mass of (B) an organopolysiloxane having a degree of polymerization of 20 or higher and having 0 or 1-3 alkenyl groups per molecule, the organopolysiloxane being represented by the following average compositional formula (1): RₐSiO_{(4-a)/2} (in the formula, R represents the same or different monovalent hydrocarbon groups, and a is a positive number of 1.95-2.05); 10-100 parts by mass of (C) reinforcing silica having a specific surface area of 50 m²/g or higher by the BET method with respect to 100 total parts by mass of components (A) and (B); and 1-150 parts by mass of (D) particles selected from the group consisting of specific organic resin particles, inorganic particles, and silicone powder particles. This polyolefin rubber composition can be compression molded, steam vulcanized, etc., exhibits surface slidability after curing, does not undergo reduction in mechanical properties, and has exceptional blocking resistance.

## Description

### TECHNICAL FIELD

The present invention relates to a polyolefin-based rubber composition that affords a cured product having surface slidability, and relates in particular to a polyolefin-based rubber composition that affords a cured product having surface slidability which is useful as an automotive weatherstripping material and windshield wiper material.

### BACKGROUND ART

Polyolefin-based synthetic rubbers generally have excellent electrical and mechanical properties, and therefore are widely used in electrical insulating materials, radiator hoses, weatherstripping and windshield wiper blades.

The addition of organopolysiloxane to this polyolefin-based synthetic rubber in order to impart surface slidability has been disclosed in, for example, JP-A 2011-052031 (Patent Document 1) and WO 2008/7798 (Patent Document 2).

However, Patent Document 1 makes no mention of the molecular weight and alkenyl group content of the organopolysiloxane. Although Patent Document 2 does mention the addition of a polysiloxane having a molecular weight of from about 100 to about 2,000,000, when a low-molecular-weight organopolysiloxane is added, the polysiloxane bleeds out onto the surface of molded articles, giving rise to, for example, foreign matter adhesion, which is undesirable. Nor is sufficient slidability achieved in either of these cases.

The addition of an organohydrogenpolysiloxane and a platinum catalyst to this polyolefin-based synthetic rubber is described in, for example, JP-A 2016-141790 (Patent Document 3) and JP-A 2007-177082 (Patent Document 4). However, organohydrogenpolysiloxanes are compounds that can be used as crosslinking agents for polyolefin-based synthetic rubbers; as a result, organohydrogenpolysiloxanes having at least two SiH groups per molecule are required. Also, JP-A 2014-136729 (Patent Document 5) discloses art which reactively adds an organohydrogenpolysiloxane that is on average mono-SiH-terminated to a polyolefin-based synthetic rubber. However, such mono-SiH-terminated organohydrogenpolysiloxanes are expensive and moreover have the drawback of lowering the mechanical properties.

Apart from these methods, techniques for, e.g., coating a solvent-diluted or emulsion-type silicone composition onto the surface of cured polyolefin-based synthetic rubber are known, but these have drawbacks in terms of, for example, productivity, safety and cost. In addition, when polyolefin-based synthetic rubbers are employed in various types of industrial products, especially automotive parts and the like, they are required to have excellent blocking resistance in order to prevent them from sticking to other types of materials such as glass and sheet metal that come into contact with rubber members.

### PRIOR ART DOCUMENTS

### PATENT DOCUMENTS

Patent Document 1: JP-A 2011-052031
Patent Document 2: WO 2008/7798
Patent Document 3: JP-A 2016-141790
Patent Document 4: JP-A 2007-177082
Patent Document 5: JP-A 2014-136729

### SUMMARY OF INVENTION

### TECHNICAL PROBLEM

It is therefore an object of the present invention to provide a polyolefin-based rubber composition which can be, for example, compression-molded or steam-vulcanized, which exhibits surface slidability when cured, and which moreover has an excellent blocking resistance without declines in the mechanical properties.

### SOLUTION TO PROBLEM

The inventors have conducted extensive investigations in order to achieve the above object. As a result, they have found that when an organopolysiloxane having 0 or 1 to 3 alkenyl groups per molecule is compounded with an ethylene-α-olefin-unconjugated polyene random copolymer having aliphatic unsaturated groups, such as an ethylene-propylene-ethylidene norbornene copolymer, the cured composition exhibits a good surface slidability.

Accordingly, the invention provides the following polyolefin-based rubber compositions.
1. A polyolefin-based rubber composition which includes:
   (A) 100 parts by weight of an ethylene-α-olefin-unconjugated polyene random copolymer;
   (B) from 1 to 100 parts by weight of an organopolysiloxane which has a degree of polymerization of at least 20, is represented by average compositional formula (1) below and includes 0 or 1 to 3 alkenyl groups per molecule

      RₐSiO_{(4-a)/2} (1)

      (wherein R represents like or unlike monovalent hydrocarbon groups, and the subscript 'a' is a positive number from 1.95 to 2.05);
   (C) from 10 to 100 parts by weight of a reinforcing silica having a specific surface area as determined by the BET method of at least 50 m²/g, per 100 parts by weight of components (A) and (B) combined; and
   (D) from 1 to 150 parts by weight of at least one type of organic resin particle or inorganic particle selected from (D-1) to (D-3) below and having an average particle size of from 1 to 200 µm
      (D-1) organic resin particles having a melting point of from 80 to 250°C,
      (D-2) inorganic particles having a Mohs hardness of 8 or less,
      (D-3) at least one type of silicone powder particle selected from the group consisting of silicone rubber powders, silicone resin powders, and silicone composite powders having a structure in which the surface of a silicone rubber powder is covered with a silicone resin.
2. The polyolefin-based rubber composition of 1 above wherein, in formula (1) of the organopolysiloxane serving as component (B), R is a group selected from among alkyl groups of 1 to 8 carbon atoms and aryl groups of 6 to 12 carbon atoms, and the organopolysiloxane has 0 alkenyl groups.
3. The polyolefin-based rubber composition of 1 or 2 above which further includes (E) a crosslinking agent which is a combination of an organohydrogenpolysiloxane and an addition reaction catalyst, and/or an organic peroxide.
4. The polyolefin-based rubber composition of any of 1 to 3 above which further includes a hydrocarbon-based synthetic oil.
5. The polyolefin-based rubber composition of any of 1 to 4 above, wherein the rubber composition, when cured, has a surface friction coefficient of 0.3 or less.
6. The polyolefin-based rubber composition of any of 1 to 5 above, wherein the rubber composition, when cured, is used in an automotive weatherstripping member or an automotive windshield wiper member.

### ADVANTAGEOUS EFFECTS OF INVENTION

The polyolefin-based rubber composition of the present invention can be, for example, compression-molded or steam-vulcanized. The rubber composition, when cured, has an excellent blocking resistance without declines in mechanical properties such as tensile strength and elongation, and has a good surface slidability.

### DESCRIPTION OF EMBODIMENTS

The invention is described in detail below.

The ethylene-α-olefin-unconjugated polyene random copolymer serving as component (A) in the invention is the chief constituent polymer of the polyolefin-based rubber composition of the invention. In particular, it is preferably a random copolymer of ethylene, an α-olefin of 3 to 20 carbon atoms and an unconjugated diene.

Specific examples of the α-olefin of 3 to 20 carbon atoms include propylene, 1-butene, 4-methyl-1-pentene, 1-hexene, 1-pentene, 1-heptene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyl-1-decene, 11-methyl-1-dodecene and 12-ethyl-1-tetradecene. Of these, α-olefins of 3 to 10 carbon atoms are preferred. In particular, the use of, for example, propylene, 1-butene, 1-hexene and 1-octene is preferred. These α-olefins may be used singly or two or more may be used in combination.

Exemplary unconjugated polyenes that may be preferably used include cyclic unconjugated dienes having a norbornene skeleton of general formula (2) or (3) below. 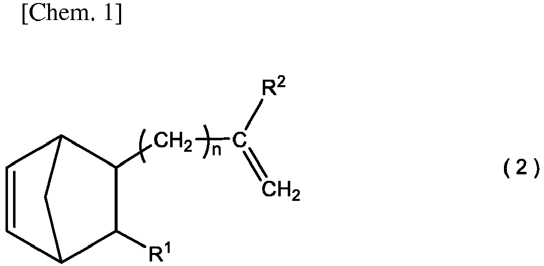 In general formula (2) above, the subscript n is an integer from 0 to 10 and R¹ is a hydrogen atom or an alkyl group of 1 to 10 carbon atoms. Specific examples of the alkyl group of 1 to 10 carbon atoms represented by R¹ include methyl, ethyl, propyl, isopropyl, n-butyl, isobutyl, sec-butyl, t-butyl, n-pentyl, isopentyl, t-pentyl, neopentyl, hexyl, isohexyl, heptyl, octyl, nonyl and decyl groups. R² is a hydrogen atom or an alkyl group of 1 to 5 carbon atoms. Specific examples of the alkyl group of 1 to 5 carbon atoms represented by R² include methyl, ethyl, propyl, isopropyl, n-butyl, isobutyl, sec-butyl, t-butyl, n-pentyl, isopentyl, t-pentyl and neopentyl groups. Some or all R¹ and R² groups may be substituted with halogen atoms such as chlorine atoms.

Specific examples of the norbornene skeleton-containing cyclic unconjugated diene of general formula (2) above include 5-vinyl-2-norbornene, 5-(2-propenyl)-2-norbornene, 5-(3-butenyl)-2-norbornene, 5-(1-methyl-2-propenyl)-2-norbornene, 5-(4-pentenyl)-2-norbornene, 5-(1-methyl-3-butenyl)-2-norbornene, 5-(5-hexenyl)-2-norbornene, 5-(1-methyl-4-pentenyl)-2-norbornene, 5-(2,3-dimethyl-3-butenyl)-2-norbornene, 5-(2-ethyl-3-butenyl)-2-norbornene, 5-(6-heptenyl)-2-norbornene, 5-(3,4-dimethyl-4-pentenyl)-2-norbornene, 5-(3-ethyl-4-pentenyl)-2-norbornene, 5-(7-octenyl)-2-norbornene, 5-(2-methyl-6-heptenyl)-2-norbornene, 5-(1,2-dimethyl-5-hexenyl)-2-norbornene, 5-(5-ethyl-5-hexenyl)-2-norbornene, 5-(1,2,3-trimethyl-4-pentenyl)-2-norbornene and 6-chloromethyl-5-isopropenyl-2-norbornene. Of these, 5-vinyl-2-norbornene, 5-(2-propenyl)-2-norbornene, 5-(3-butenyl)-2-norbornene, 5-(4-pentenyl)-2-norbornene, 5-(5-hexenyl)-2-norbornene, 5-(6-heptentyl)-2-norbornene and 5-(7-octenyl)-2-norbornene are preferred. 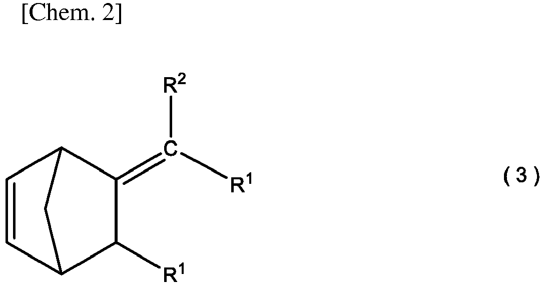 In general formula (3) above, each R¹ is independently a hydrogen atom or an alkyl group of 1 to 10 carbon atoms and R² is a hydrogen atom or an alkyl group of 1 to 5 carbon atoms. The alkyl groups of R¹ and R² are exemplified by the same alkyl groups as mentioned above.

Specific examples of the norbornene skeleton-containing cyclic unconjugated diene of general formula (3) include 5-methylene-2-norbornene, 5-ethylidene-2-norbornene, 5-(1-methylethylidene)-2-norbornene and 5-propylidene-2-norbornene. Of these, 5-methylene-2-norbornene and 5-ethylidene-2-norbornene are preferred. These norbornene skeleton-containing cyclic unconjugated dienes of formula (2) or (3) may be used singly or two or more may be used in combination.

Specific examples of unconjugated polyenes other than those of general formulas (2) and (3) include acyclic unconjugated dienes such as 1,4-hexadiene, 3-methyl-1,4-hexadiene, 4-methyl-1,4-hexadiene, 5-methyl-1,4-hexadiene, 4,5-dimethyl-1,4-hexadiene and 7-methyl-1,6-octadiene; cyclic unconjugated dienes such as tetrahydroindene, 2-methyltetrahydroindene and dicyclopentadiene; and norbornene skeleton-containing cyclic unconjugated trienes such as 2,3-diisopropylidene-5-norbornene, 2-ethylidene-3-isopropylidene-5-norbornene and 2-propenyl-2,5-norbornadiene.

In the ethylene-α-olefin-unconjugated polyene random copolymer serving as component (A) of the present invention, it is preferable for structural units derived from α-olefins having from 3 to 20 carbon atoms to account for 10 to 50 mol% of all structural units (100 mol%) and for unconjugated polyene random copolymer to account for 1.0 to 6.0 mol% of all structural units (100 mol%). When these molar ratios fall within the above ranges, a rubber composition having particularly outstanding strength properties and rubber elasticity can be obtained.

Commercial products may be used as the ethylene-α-olefin-unconjugated polyene random copolymer serving as component (A). Examples include EP21, EP27 and EP43 from JSR Corporation; EPT 3045 from Mitsui Chemicals, Inc.; Esprene 301 and Esprene 502 from Sumitomo Chemical Co., Ltd.; Keltan 2650 from LANXESS; and NORDEL IP3640 from Dow Elastomer.

The organopolysiloxane serving as component (B) of the invention is an additive for imparting surface slidability to the polyolefin-based rubber compositions, and has 0 or 1 to 3 alkenyl groups per molecule. This organopolysiloxane serving as component (B) is represented by the following average compositional formula (1).

RₐSiO_{(4-a)/2} (1)

In the formula, R represents like or unlike monovalent hydrocarbon groups and the subscript 'a' is a positive number from 1.95 to 2.05.

Examples of silicon-bonded substituted or unsubstituted monovalent hydrocarbon groups represented by R in formula (1) include alkyl groups such as methyl, ethyl, propyl, isopropyl, butyl, isobutyl, t-butyl, pentyl, neopentyl, hexyl, cyclohexyl, octyl, nonyl and decyl groups; aryl groups such as phenyl, tolyl, xylyl and naphthyl groups; aralkyl groups such as benzyl, phenylethyl and phenylpropyl groups; and alkenyl groups such as vinyl, allyl, propenyl, isopropenyl, butenyl, hexenyl, cyclohexenyl and octenyl groups. Some or all hydrogen atoms on these groups may be substituted with halogen atoms such as fluorine, bromine and chlorine. It is preferable for at least 90 mol% of all R groups to be methyl groups.

In the above formula, R preferably represents a group selected from the alkyl groups of 1 to 8 carbon atoms or the aryl groups of 6 to 12 carbon atoms mentioned above

It is desirable for the organopolysiloxane used as component (B) to be included in an amount per 100 parts by weight of component (A) that is from 1 to 100 parts by weight, preferably from 5 to 100 parts by weight, and more preferably from 20 to 100 parts by weight. At less than 1 part by weight, a useful surface slidability is not obtained; at more than 100 parts by weight, the strength markedly decreases or sulfur vulcanization becomes difficult.

The organopolysiloxane serving as component (B) has a degree of polymerization that is at least 20, preferably from 30 to 100,000, more preferably from 3,000 to 50,000, and even more preferably from 4,000 to 20,000. When this degree of polymerization is less than 20, the polysiloxane may bleed out onto the surface of molded articles and undesirable effects such as foreign matter adhesion may arise.

The degree of polymerization can be determined as the polystyrene-equivalent weight-average degree of polymerization by gel permeation chromatographic (GPC) analysis.

### [Measurement Conditions]

- Developing solvent: toluene
- Flow rate: 1 mL/min
- Detector: differential refractive index detector (RI)
- Columns: KF-805L × 2 (Shodex)
- Column temperature: 25°C
- Amount of sample injected: 30 µL (toluene solution having a concentration of 0.2 wt%)

In addition, the number of alkenyl groups on the organopolysiloxane serving as component (B) is 0 or 1 to 3, preferably 0 or 1 to 2, and more preferably 0 (meaning that the organopolysiloxane has no alkenyl groups). When the number of alkenyl groups per molecule is 4 or more, the friction coefficient rises markedly and slidability is lost.

The reinforcing silica serving as component (C) of the invention acts as a filler that imparts excellent mechanical properties to the resulting polyolefin-based rubber composition. This reinforcing silica may be precipitated silica (wet silica) or fumed silica (dry silica), and may be one in which numerous silanol (SiOH) groups are present at the surface. The reinforcing silica serving as component (C) in the invention has a BET specific surface area which must be at least 50 m²/g, and is preferably from 100 to 400 m²/g. When this specific surface area is less than 50 m²/g, the reinforcing effect by component (C) is inadequate.

The reinforcing silica serving as component (C) may be used in an untreated state or, optionally, a reinforcing silica that has been surface-treated with an organosilicon compound such as an organopolysiloxane, organopolysilazane, chlorosilane or alkoxysilane may be used. These reinforcing silicas may be used singly, or two or more may be used in combination.

The reinforcing silica serving as component (C) is included in an amount, per 100 parts by weight of components (A) and (B) combined, of from 10 to 100 parts by weight, and preferably from 20 to 80 parts by weight.

In component (D) of the invention, the organic resin particles (D-1) and the inorganic particles (D-2) both have an average particle size that is preferably from 1 to 200 µm, and more preferably from 2 to 100 µm. Average particle sizes within this range are preferred because the dispersibility in the rubber composition is good. In this invention, "average particle size" refers to a value measured by a method that is suitably selected according to the particle shape from among, for example, microscope methods, light scattering methods, laser diffraction methods, liquid phase sedimentation methods and electrical resistance methods.

Specific examples of organic resin particles (D-1) include graphite, silicone resins, silicone rubbers, silicone composite resins, silane-supported powders, polytetrafluoroethylene, polyetheretherketone, nylon 6, nylon 12, nylon 6,6, acrylic resins, modified acrylic resins, polyurethanes, modified polyurethanes, low-density polyethylene, high-density polyethylene, ultra-high-molecular-weight polyethylene and polypropylene. Of these, from the standpoint of imparting processability, non-tackiness and slidability, preferred use can be made of nylon 12 or ultra-high-molecular-weight polyethylene.

The organic resin particles used here are organic resin particles which have a melting point, as measured by the DSC-based measurement method described in JIS K 7121: 2012, in the range of 80 to 250°C, and preferably 120 to 250°C. When organic resin particles having a melting point below 80°C are used, melting of the particles arises due to heat during molding, making it difficult to impart sufficient slidability and abrasion resistance. When organic resin particles having a melting point higher than 250°C are used, particle flow has difficulty occurring due to heat during processing, as a result of which the processability of the composition may decrease and the friction coefficient may rise, which is undesirable.

The organic resin particles are included in an amount of from 1 to 150 parts by weight, and preferably from 10 to 100 parts by weight, per 100 parts by weight of the rubber composition. At less than 1 part by weight, a slidability and abrasion resistance-imparting effect may not arise; at more than 150 parts by weight, poor particle dispersion may occur or the cured composition may become hard and brittle. The use of organic resin particles having an average particle size in the range of 1 to 200 µm is preferred from the standpoint of dispersibility in the rubber composition.

Specific examples of inorganic particles (D-2) include wet silica, dry silica, talc, mica, bentonite, molybdenum disulfide, molybdenum trioxide, ammonium molybdenate, boron nitride, titanium oxide, clay, kaolin, alumina and Sillitin. Of these, from the standpoint of increasing the flexural strength and elastic modulus of the composition and imparting non-tackiness and slidability, the use of talc, mica or the like is preferred.

Inorganic particles having a Mohs hardness of 8 or less, and preferably from 1 to 6, are used. When inorganic particles having a Mohs hardness higher than 8 are used, the processability of the composition may decrease or the cured composition may become hard and brittle.

The amount of inorganic particles included per 100 parts by weight of the rubber composition is from 1 to 150 parts by weight, and preferably from 10 to 100 parts by weight. At less than 1 part by weight, slidability and abrasion resistance-imparting effects may not be obtained; at more than 150 parts by weight, poor dispersion of the particles may arise, or the composition may become hard and brittle.

From the standpoint of their dispersibility in the rubber composition, it is preferable for the inorganic particles that are added to be ones having an average particle size in the range of 1 to 200 µm.

The silicone powder (D-3) is exemplified by silicone resin powders which are polyorganosilsesquioxane fine powders, such as those mentioned in JP-B S40-16917, JP-A S54-72300, JP-A S60-13813, JP-A H03-244636 and JP-A H04-88023; and silicone composite powders having a structure wherein the surface of a silicone rubber powder is covered with a polyorganosilsesquioxane fine powder (resin), such as those mentioned in JP-A H07-196815. These silicone powders may be used singly or two or more types may be used together. These silicone powders can be prepared by known production methods, and are available as commercial products.

The amount of silicone powder included per 100 parts by weight of the rubber composition is from 1 to 150 parts by weight, and preferably from 10 to 100 parts by weight. At less than 1 part by weight, slidability and abrasion resistance-imparting effects may not be obtained; at more than 150 parts by weight, poor dispersion of the particles may arise or the composition may become hard and brittle.

The above-described organic resin particles, inorganic particles and silicone powder may be used singly or two or more types may be used together.

In addition to above components (A) to (D), a crosslinking agent (curing agent) (E) may be added to the polyolefin-based rubber composition of the invention. The curing agent serving as component (E) is not particularly limited, provided that, in the polyolefin-based rubber composition of the invention, it is able to react with the ethylene-α-olefin-unconjugated polyene random copolymer serving as component (A) and alkenyl groups present on the molecular chain of the organopolysiloxane serving as component (B) and thereby cure the composition. Component (E) may be of a single type used alone or of two or more types used in combination. Examples of component (E) include (E-1) organic peroxide curing agents, (E-2) addition reaction curing agents, and combinations of components (E-1) and (E-2).

Examples of (E-1) organic peroxide curing agents include benzoyl peroxide, 2,4-dichlorobenzoyl peroxide, p-methylbenzoyl peroxide, o-methylbenzoyl peroxide, 2,4-dicumyl peroxide, 2,5-dimethyl-2,5-bis(t-butylperoxy)hexane, di-t-butyl peroxide, t-butyl perbenzoate and 1,6-hexanediol-bis-t-butyl peroxycarbonate. The amount of organic peroxide added per 100 parts by weight of components (A) and (B) is preferably from 0.1 to 10 parts by weight, and especially from 0.2 to 5 parts by weight. When too little is added, curing may be inadequate; when too much is added, the cured silicone rubber may undergo yellowing due to organic peroxide decomposition residues. In addition, components (E-1) and (E-2) may be combined and included, within the above ranges in their respective amounts, in components (A) and (B) so as to give a co-vulcanization type polyolefin-based rubber composition that makes use of both addition reaction curing and organic peroxide curing.

An organohydrogenpolysiloxane and a hydrosilylating catalyst are used in combination as the (E-2) addition reaction curing agent. The organohydrogenpolysiloxane has a structure which may be linear, cyclic, branched or a three-dimensional network structure, so long as it contains at least 2, preferably at least 3, more preferably from 3 to 200, and even more preferably from about 4 to about 100, silicon-bonded hydrogen atoms (SiH groups) per molecule. The SiH groups may be located at the ends of the molecular chain, partway along the molecular chain, or in both places. Organohydrogenpolysiloxanes that are known as crosslinking agents for addition reaction-curable silicone rubber compositions may be used as this organohydrogenpolysiloxane. For example, organohydrogenpolysiloxanes having the average compositional formula (4) below may be used.

R³ₚH_{q}SiO_{(4-p-q)/2} (4)

In average compositional formula (4), R³ represents monovalent hydrocarbon groups which may be like or unlike, preferably ones without any aliphatic unsaturated bonds. That is, R³ is preferably a monovalent hydrocarbon group having from 1 to 12 carbon atoms, and especially from 1 to 8 carbon atoms. Specific examples include alkyl groups such as methyl, ethyl and propyl groups, cycloalkyl groups such as the cyclohexyl group, aryl groups such as phenyl and tolyl groups, and aralkyl groups such as benzyl, 2-phenylethyl and 2-phenylpropyl groups. Some or all hydrogen atoms on these groups may be substituted with halogen atoms. An example of such a group is the 3,3,3-trifluoropropyl group.

In the above average compositional formula (4), the subscripts p and q are positive numbers which satisfy the following conditions: 0 < p < 3, preferably 0.5 ≤ p ≤ 2.2, and more preferably 1.0 ≤ p ≤ 2.0; 0 < q < 3, preferably 0.002 ≤ q ≤ 1.1, and more preferably 0.005 ≤ q ≤ 1; 0 < p+q ≤ 3, preferably 1 ≤ p+q ≤ 3, and more preferably 1.002 ≤ p+q ≤ 2.7.

This organohydrogenpolysiloxane has a viscosity at 25°C, as measured using a rotational viscometer by the method described in JIS K 7117-1: 1999, of from 0.5 to 10,000 mPa·s, and especially from 1 to 300 mPa·s.

Specific examples of organohydrogenpolysiloxanes represented by the above average compositional formula (4) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, methylhydrogensiloxane-dimethylsiloxane cyclic copolymer, methylhydrogenpolysiloxane capped at both ends with trimethylsiloxy groups, dimethylsiloxane-methylhydrogensiloxane copolymer capped at both ends with trimethylsiloxy groups, dimethylpolysiloxane capped at both ends with dimethylhydrogensiloxy groups, dimethylsiloxane-methylhydrogensiloxane copolymers capped at both ends with dimethylhydrogensiloxy groups, methylhydrogensiloxane-diphenylsiloxane copolymers capped at both ends with trimethylsiloxy groups, methylhydrogensiloxane-diphenylsiloxane-dimethylsiloxane copolymers capped at both ends with trimethylsiloxy groups, methylhydrogensiloxane-methylphenylsiloxane-dimethylsiloxane copolymers capped at both ends with trimethylsiloxy groups, methylhydrogensiloxane-dimethylsiloxane-diphenylsiloxane copolymers capped at both ends with dimethylhydrogensiloxy groups, methylhydrogensiloxane-dimethylsiloxane-methylphenylsiloxane copolymers capped at both ends with dimethylhydrogensiloxy groups, copolymers consisting of (CH₃)₂HSiO_{1/2} units, (CH₃)₃SiO_{1/2} units and SiO_{4/2} units, copolymers consisting of (CH₃)₂HSiO_{1/2} units and SiO_{4/2} units, and copolymers consisting of (CH₃)₂HSiO_{1/2} units, SiO_{4/2} units and (C₆H₅)₃SiO_{1/2} units, as well as the any of the foregoing compounds in which some or all methyl groups are substituted with other alkyl groups, phenyl groups or the like.

The amount of such organohydrogenpolysiloxane included per 100 parts by weight of components (A) and (B) is preferably from 0.1 to 40 parts by weight. The ratio of silicon-bonded hydrogen atoms (=SiH groups) per alkenyl group in components (A) and (B) is preferably from 0.5 to 10, and more preferably from 0.7 to 5. At less than 0.5, crosslinking is inadequate and a sufficient mechanical strength may not be obtained. At more than 10, the physical properties after curing may decrease; in particular, the blocking resistance may worsen or the compression set may become larger.

The hydrosilylation catalyst is a catalyst which effects a hydrosilylation addition reaction between alkenyl groups on components (A) and (B) and the silicon-bonded hydrogen atoms (SiH groups) on the organohydrogenpolysiloxane. Hydrosilylation catalysts are exemplified by platinum family metal catalysts, such as uncombined platinum family metals and compounds thereof. Hitherto known catalysts for addition reaction-curable silicone rubber compositions may be used here for this purpose. Examples include platinum catalysts such as particulate platinum metal adsorbed onto a support such as silica, alumina or silica gel; alcohol solutions of platinic chloride, chloroplatinic acid or chloroplatinic acid hexahydrate; and palladium catalysts and rhodium catalysts. Platinum or a platinum compound (platinum catalyst) is preferred.

The amount of hydrosilylation catalyst added should be such as to enable the addition reaction to proceed. The amount, in terms of the platinum family metal, is generally in the range of 1 ppm by weight to 1 wt%, and preferably in the range of 10 to 500 ppm by weight, based on component (A) and the organopolysiloxane of component (B). When the amount of addition is less than 1 ppm by weight, the addition reaction may not adequately proceed and curing may be insufficient. On the other hand, when the amount of addition exceeds 1 wt%, addition in excess of this amount has little effect on the reactivity and may be uneconomical.

In addition to above components (A) to (E), where necessary, optional ingredients for adjusting the properties of the cured composition may also be added to the rubber composition of the invention. Examples of such ingredients include fillers such as aluminum silicate, quartz powder, fused quartz powder, diatomaceous earth, calcium carbonate, titanium dioxide and carbon black, and also antidegradants, ultraviolet absorbers and colorants. The amount of filler added, inclusive of the amount of component (C), is preferably set to not more than 500 parts by weight per 100 parts by weight of components (A) and (B) combined. At more than 500 parts by weight, the cured composition may become hard and brittle.

The polyolefin-based rubber composition of the invention can be obtained by mixing together given amounts of above components (A) to (D) and, if necessary, component (E) using, for example, a two-roll mill, kneader, Banbury mixer or the like. By adding a hydrocarbon-based synthetic oil at this time, the viscosity of the composition can be lowered, thereby improving the processability. The amount of hydrocarbon-based synthetic oil added per 100 parts by weight of components (A) and (B) combined is preferably set to from 3 and up to 200 parts by weight, and more preferably from 5 to 100 parts by weight. When the amount of addition exceeds 200 parts by weight, a sufficient strength may not be obtained for the cured composition.

The above hydrocarbon-based synthetic oil is exemplified by liquid paraffins synthesized from mineral oils, poly-α-olefins (PAO), which are oligomers of α-olefins, and paraffinic oils such as polybutene. Examples of liquid paraffins include the Diana Process Oil PW series (Idemitsu Kosan Co., Ltd.), the Moresco White series (Moresco Corporation), and the SUNPAR series (Japan Sun Oil Co., Ltd.). Examples of PAO and polybutenes include the Lucant series (Mitsui Chemicals, Inc.) and the Nisseki Polybutene LV series (JX Energy Corporation).

Aside from component (A), component (B), component (C) and component (D), an amino-based silane coupling agent or a methacrylic silane compound agent may be added to the rubber composition of the invention for surface modification of the organic resin particles and inorganic particles. By modifying the surface of the organic resin particles or inorganic particles with a coupling agent, the dispersibility of the particles in the rubber composition can be increased. The silane coupling agent used for surface modification of the filler may be used in either a filler pretreatment step or in a compound production step. Alternatively, a vinyl-based silane coupling agent or the like may be added for the purpose of modification so as to increase the tensile strength and increase the flexibility of the rubber composition. The silane coupling agent is included in an amount of from 0.1 to 20 parts by weight per 100 parts by weight of components (A) and (B) combined.

In this invention, by compression-molding or steam-vulcanizing the above polyolefin-based rubber composition, a cured polyolefin rubber of excellent surface slidability can be obtained. The curing conditions at this time are as follows. In compression molding, it is desirable to carry out curing at a temperature of from 120 to 200°C for 3 to 30 minutes. In steam vulcanization, the polyolefin-based rubber composition can be efficiently vulcanized at a temperature of 140 to 170°C for a period of 10 to 60 minutes, and rubber molded articles can be continuously vulcanized. In cases where slidability of only the surface is required, it is also possible to carry out double-layer extrusion of a common EPDM rubber and the rubber composition of the invention and to employ the rubber composition of the invention only at the surface.

The coefficient of friction at the surface of the cured polyolefin-based rubber is preferably not more than 0.3, more preferably not more than 0.25, and even more preferably not more than 0.20. The polyolefin-based rubber compositions of the invention may be used in various types of industrial products, such as parts for office equipment and automobiles, and in particular can be preferably used in automotive parts such as electrical insulation, radiator hoses, weatherstripping and windshield wiper blades.

### EXAMPLES

The invention is illustrated more fully below by way of Examples and Comparative Examples, although the invention is not limited by these Examples.

### [Example 1]

The following were mixed together in a pressure kneader: 100 parts by weight of an ethylene/propylene/ethylidene norbornene copolymer (Keltan® 2650 from LANXESS), 40 parts by weight of wet silica having a specific surface area of 200 m²/g (Nipsil LP, from Tosoh Silica Corporation) and 10 parts by weight of SUNPAR 2280 (Japan Sun Oil Co., Ltd.). The following were then added and mixed in: a dimethylpolysiloxane with a degree of polymerization of 30 and having a SiH group at one end of the polymer and a trimethylsiloxy group at the other end, in an amount of 5 parts by weight (an amount such that the number of SiH groups per unsaturated group on the Keltan® 2650 becomes 0.5), and a 1,3-divinyl-1,1,3,3-tetramethyldisiloxane complex of chloroplatinic acid in an amount such that the level of platinum with respect to the Keltan® 2650 becomes 5 ppm. Next, 30 parts by weight of SP-10 (nylon 12 having an average particle size of 10 µm and a melting point of 176°C; available from Toray Industries, Inc.) was blended into 100 parts by weight of the mixture using a two-roll mill. Two parts by weight of the peroxide-based vulcanizing agent C-11A (Shin-Etsu Chemical Co., Ltd.) was then added to 100 parts by weight of the mixture and uniformly blended therein. The resulting mixture was designated as "Composition 1."

### [Example 2]

The following were mixed together in a pressure kneader: 100 parts by weight of an ethylene/propylene/ethylidene norbornene copolymer (Keltan® 2650 from LANXESS), 40 parts by weight of wet silica having a specific surface area of 200 m²/g (Nipsil LP, from Tosoh Silica Corporation) and 10 parts by weight of SUNPAR 2280 (Japan Sun Oil Co., Ltd.). The following were then added and mixed in: a dimethylpolysiloxane with a degree of polymerization of 30 and having a SiH group at one end of the polymer and a trimethylsiloxy group at the other end, in an amount of 5 parts by weight (an amount such that the number of SiH groups per unsaturated group on the Keltan® 2650 becomes 0.5), and a 1,3-divinyl-1,1,3,3-tetramethyldisiloxane complex of chloroplatinic acid in an amount such that the level of platinum with respect to the Keltan® 2650 becomes 5 ppm. Next, 30 parts by weight of LMR (talc having an average particle size of 2 µm and a Mohs hardness of 1; available from Fuji Talc Industrial Co., Ltd.) and 1 part by weight of KBM603 (N-(2-aminoethyl)-3-aminopropyltrimethoxysilane; from Shin-Etsu Chemical Co., Ltd.) were blended into 100 parts by weight of the mixture using a two-roll mill. Two parts by weight of the peroxide-based vulcanizing agent C-11A (Shin-Etsu Chemical Co., Ltd.) was then added to 100 parts by weight of the mixture and uniformly blended therein. The resulting mixture was designated as "Composition 2."

### [Example 3]

The following were mixed together in a pressure kneader: 100 parts by weight of an ethylene/propylene/ethylidene norbornene copolymer (Keltan® 2650 from LANXESS), 40 parts by weight of wet silica having a specific surface area of 200 m²/g (Nipsil LP, from Tosoh Silica Corporation) and 10 parts by weight of SUNPAR 2280 (Japan Sun Oil Co., Ltd.). The following were then added and mixed in: a dimethylpolysiloxane with a degree of polymerization of 30 and having a SiH group at one end of the polymer and a trimethylsiloxy group at the other end, in an amount of 5 parts by weight (an amount such that the number of SiH groups per unsaturated group on the Keltan® 2650 becomes 0.5), and a 1,3-divinyl-1,1,3,3-tetramethyldisiloxane complex of chloroplatinic acid in an amount such that the level of platinum with respect to the Keltan® 2650 becomes 5 ppm. Next, 30 parts by weight of Y-2400 (mica having an average particle size of 9 µm and a Mohs hardness of 2.8; available from Yamaguchi Mica Co., Ltd.) and 1 part by weight of KBM603 (N-(2-aminoethyl)-3-aminopropyltrimethoxysilane; from Shin-Etsu Chemical Co., Ltd.) were blended into 100 parts by weight of the mixture using a two-roll mill. Two parts by weight of the peroxide-based vulcanizing agent C-11A (Shin-Etsu Chemical Co., Ltd.) was then added to 100 parts by weight of the mixture and uniformly blended therein. The resulting mixture was designated as "Composition 3."

### [Example 4]

The following were mixed together in a pressure kneader: 100 parts by weight of an ethylene/propylene/5-ethylidene-2-norbornene copolymer (available under the product name EP43 from JSR Corporation) and 40 parts by weight of an organopolysiloxane with a degree of polymerization of 5,000 and having two alkenyl groups per molecule; and additionally, per 100 parts by weight of components (A) and (B), 40 parts by weight of wet silica having a specific surface area of 200 m²/g (Nipsil LP, from Tosoh Silica Corporation) and 10 parts by weight of SUNPAR 2280 (Japan Sun Oil Co., Ltd.). Next, 70 parts by weight of SP-10 (nylon 12 having an average particle size of 10 µm and a melting point of 176°C; available from Toray Industries, Inc.) and 30 parts by weight of Inhance UH-1750 (an ultra-high-molecular-weight polyethylene having an average particle size of 20 µm and a melting point of 136°C; available from Fluoro-Seal) were blended into 100 parts by weight of the mixture using a two-roll mill. Two parts by weight of the peroxide-based vulcanizing agent C-11A (Shin-Etsu Chemical Co., Ltd.) was then added to 100 parts by weight of the mixture and uniformly blended therein. The resulting mixture was designated as "Composition 4."

### [Example 5]

The following were mixed together in a pressure kneader: 100 parts by weight of an ethylene/propylene/5-ethylidene-2-norbornene copolymer (available under the product name EP43 from JSR Corporation) and 30 parts by weight of an organopolysiloxane with a degree of polymerization of 5,000 and having two alkenyl groups per molecule; and additionally, per 100 parts by weight of components (A) and (B), 40 parts by weight of wet silica having a specific surface area of 200 m²/g (Nipsil LP, from Tosoh Silica Corporation) and 10 parts by weight of SUNPAR 2280 (from Japan Sun Oil Co., Ltd.). Next, 70 parts by weight of SP-10 (nylon 12 having an average particle size of 10 µm and a melting point of 176°C; available from Toray Industries, Inc.) and 30 parts by weight of Inhance UH-1750 (an ultra-high-molecular-weight polyethylene having an average particle size of 20 µm and a melting point of 136°C; available from Fluoro-Seal) were blended into 100 parts by weight of the mixture using a two-roll mill. Two parts by weight of the peroxide-based vulcanizing agent C-11A (Shin-Etsu Chemical Co., Ltd.) was then added to 100 parts by weight of the mixture and uniformly blended therein. The resulting mixture was designated as "Composition 5."

### [Example 6]

The following were mixed together in a pressure kneader: 100 parts by weight of an ethylene/propylene/5-ethylidene-2-norbornene copolymer (available under the product name EP43 from JSR Corporation) and 70 parts by weight of an organopolysiloxane with a degree of polymerization of 5,000 and having two alkenyl groups per molecule; and additionally, per 100 parts by weight of components (A) and (B), 40 parts by weight of wet silica having a specific surface area of 200 m²/g (Nipsil LP, from Tosoh Silica Corporation) and 10 parts by weight of SUNPAR 2280 (from Japan Sun Oil Co., Ltd.). Next, 70 parts by weight of SP-10 (nylon 12 having an average particle size of 10 µm and a melting point of 176°C; available from Toray Industries, Inc.) and 30 parts by weight of Inhance UH-1750 (an ultra-high-molecular-weight polyethylene having an average particle size of 20 µm and a melting point of 136°C; available from Fluoro-Seal) were blended into 100 parts by weight of the mixture using a two-roll mill. Two parts by weight of the peroxide-based vulcanizing agent C-11A (Shin-Etsu Chemical Co., Ltd.) was then added to 100 parts by weight of the mixture and uniformly blended therein. The resulting mixture was designated as "Composition 6."

### [Example 7]

The following were mixed together in a pressure kneader: 100 parts by weight of an ethylene/propylene/5-ethylidene-2-norbornene copolymer (available under the product name EP43 from JSR Corporation) and 100 parts by weight of an organopolysiloxane with a degree of polymerization of 5,000 and having two alkenyl groups per molecule; and additionally, per 100 parts by weight of components (A) and (B), 40 parts by weight of wet silica having a specific surface area of 200 m²/g (Nipsil LP, from Tosoh Silica Corporation) and 10 parts by weight of SUNPAR 2280 (from Japan Sun Oil Co., Ltd.). Next, 70 parts by weight of SP-10 (nylon 12 having an average particle size of 10 µm and a melting point of 176°C; available from Toray Industries, Inc.) and 30 parts by weight of Inhance UH-1750 (an ultra-high-molecular-weight polyethylene having an average particle size of 20 µm and a melting point of 136°C; available from Fluoro-Seal) were blended into 100 parts by weight of the mixture using a two-roll mill. Two parts by weight of the peroxide-based vulcanizing agent C-11A (Shin-Etsu Chemical Co., Ltd.) was then added to 100 parts by weight of the mixture and uniformly blended therein. The resulting mixture was designated as "Composition 7."

### [Example 8]

The following were mixed together in a pressure kneader: 100 parts by weight of an ethylene/propylene/ethylidene norbornene copolymer (Keltan® 2650 from LANXESS), 40 parts by weight of wet silica having a specific surface area of 200 m²/g (Nipsil LP, from Tosoh Silica Corporation) and 10 parts by weight of SUNPAR 2280 (Japan Sun Oil Co., Ltd.). The following were then added and mixed in: a dimethylpolysiloxane with a degree of polymerization of 30 and having a SiH group at one end of the polymer and a trimethylsiloxy group at the other end, in an amount of 5 parts by weight (an amount such that the number of SiH groups per unsaturated group on the Keltan® 2650 becomes 0.5), and a 1,3-divinyl-1,1,3,3-tetramethyldisiloxane complex of chloroplatinic acid in an amount such that the level of platinum with respect to the Keltan® 2650 becomes 5 ppm. Next, 1 part by weight of KBM603 (N-(2-aminoethyl)-3-aminopropyltrimethoxysilane; from Shin-Etsu Chemical Co., Ltd.) and 10 parts by weight of SP-10 (nylon 12 having an average particle size of 10 µm and a melting point of 176°C; available from Toray Industries, Inc.) were blended into 100 parts by weight of the mixture using a two-roll mill. Two parts by weight of the peroxide-based vulcanizing agent C-11A (Shin-Etsu Chemical Co., Ltd.) was then added to 100 parts by weight of the mixture and uniformly blended therein. The resulting mixture was designated as "Composition 8."

### [Example 9]

The following were mixed together in a pressure kneader: 100 parts by weight of an ethylene/propylene/5-ethylidene-2-norbornene copolymer (available under the product name EP43 from JSR Corporation) and 40 parts by weight of an organopolysiloxane with a degree of polymerization of 5,000 and having two alkenyl groups per molecule; and additionally, per 100 parts by weight of components (A) and (B), 40 parts by weight of wet silica having a specific surface area of 200 m²/g (Nipsil LP, from Tosoh Silica Corporation) and 10 parts by weight of SUNPAR 2280 (from Japan Sun Oil Co., Ltd.). Next, 50 parts by weight of KMP-602 (a silicone composite resin having an average particle size of 30 µm; available from Shin-Etsu Chemical Co., Ltd.) was blended into 100 parts by weight of the mixture using a two-roll mill. Two parts by weight of the peroxide-based vulcanizing agent C-11A (Shin-Etsu Chemical Co., Ltd.) was then added to 100 parts by weight of the mixture and uniformly blended therein. The resulting mixture was designated as "Composition 9."

### [Comparative Example 1]

The following were mixed together in a pressure kneader: 100 parts by weight of an ethylene/propylene/ethylidene norbornene copolymer (Keltan® 2650 from LANXESS), 40 parts by weight of wet silica having a specific surface area of 200 m²/g (Nipsil LP, from Tosoh Silica Corporation) and 10 parts by weight of SUNPAR 2280 (Japan Sun Oil Co., Ltd.). The following were then added and mixed in: a dimethylpolysiloxane with a degree of polymerization of 30 and having a SiH group at one end of the polymer and a trimethylsiloxy group at the other end, in an amount of 5 parts by weight (an amount such that the number of SiH groups per unsaturated group on the Keltan® 2650 becomes 0.5), and a 1,3-divinyl-1,1,3,3-tetramethyldisiloxane complex of chloroplatinic acid in an amount such that the level of platinum with respect to the Keltan® 2650 becomes 5 ppm. Next, 30 parts by weight of A-21 (alumina having an average particle size of 50 µm and a Mohs hardness of 9; available from Sumitomo Chemical Co., Ltd.;) was blended into 100 parts by weight of the mixture using a two-roll mill. Two parts by weight of the peroxide-based vulcanizing agent C-11A (Shin-Etsu Chemical Co., Ltd.) was then added to 100 parts by weight of the mixture and uniformly blended therein. The resulting mixture was designated as "Composition 10."

### [Comparative Example 2]

The following were mixed together in a pressure kneader: 100 parts by weight of an ethylene/propylene/ethylidene norbornene copolymer (Keltan® 2650 from LANXESS), 40 parts by weight of wet silica having a specific surface area of 200 m²/g (Nipsil LP, from Tosoh Silica Corporation) and 10 parts by weight of SUNPAR 2280 (Japan Sun Oil Co., Ltd.). The following were then added and mixed in: a dimethylpolysiloxane with a degree of polymerization of 30 and having a SiH group at one end of the polymer and a trimethylsiloxy group at the other end, in an amount of 5 parts by weight (an amount such that the number of SiH groups per unsaturated group on the Keltan® 2650 becomes 0.5), and a 1,3-divinyl-1,1,3,3-tetramethyldisiloxane complex of chloroplatinic acid in an amount such that the level of platinum with respect to the Keltan® 2650 becomes 5 ppm. Next, 30 parts by weight of KT-300M (a polytetrafluoroethylene having an average particle size of 40 µm and a melting point of 320°C; available from Kitamura Ltd.) was blended into 100 parts by weight of the mixture using a two-roll mill. Two parts by weight of the peroxide-based vulcanizing agent C-11A (Shin-Etsu Chemical Co., Ltd.) was then added to 100 parts by weight of the mixture and uniformly blended therein. The resulting mixture was designated as "Composition 11."

### [Comparative Example 3]

The following were mixed together in a pressure kneader: 100 parts by weight of an ethylene/propylene/ethylidene norbornene copolymer (Keltan® 2650 from LANXESS), 40 parts by weight of wet silica having a specific surface area of 200 m²/g (Nipsil LP, from Tosoh Silica Corporation) and 10 parts by weight of SUNPAR 2280 (Japan Sun Oil Co., Ltd.). The following were then added and mixed in: a dimethylpolysiloxane with a degree of polymerization of 30 and having a SiH group at one end of the polymer and a trimethylsiloxy group at the other end, in an amount of 5 parts by weight (an amount such that the number of SiH groups per unsaturated group on the Keltan® 2650 becomes 0.5), and a 1,3-divinyl-1,1,3,3-tetramethyldisiloxane complex of chloroplatinic acid in an amount such that the level of platinum with respect to the Keltan® 2650 becomes 5 ppm. Next, 2 parts by weight of the peroxide-based vulcanizing agent C-11A (Shin-Etsu Chemical Co., Ltd.) was added to 100 parts by weight of the mixture and uniformly blended therein. The resulting mixture was designated as "Composition 12."

### [Comparative Example 4]

The following were mixed together in a pressure kneader: 100 parts by weight of an ethylene/propylene/5-ethylidene-2-norbornene copolymer (available under the product name EP43 from JSR Corporation) and 40 parts by weight of an organopolysiloxane with a degree of polymerization of 5,000 and having two alkenyl groups per molecule; and additionally, per 100 parts by weight of components (A) and (B), 40 parts by weight of wet silica having a specific surface area of 200 m²/g (Nipsil LP, from Tosoh Silica Corporation) and 10 parts by weight of SUNPAR 2280 (from Japan Sun Oil Co., Ltd.). Next, 2 parts by weight of the peroxide-based vulcanizing agent C-11A (Shin-Etsu Chemical Co., Ltd.) was added to 100 parts by weight of the mixture and uniformly blended therein. The resulting mixture was designated as "Composition 13."

### [Comparative Example 5]

The following were mixed together in a pressure kneader: 100 parts by weight of an ethylene/propylene/ethylidene norbornene copolymer (Keltan® 2650 from LANXESS), 40 parts by weight of wet silica having a specific surface area of 200 m²/g (Nipsil LP, from Tosoh Silica Corporation) and 10 parts by weight of SUNPAR 2280 (Japan Sun Oil Co., Ltd.). The following were then added and mixed in: a dimethylpolysiloxane with a degree of polymerization of 30 and having a SiH group at one end of the polymer and a trimethylsiloxy group at the other end, in an amount of 5 parts by weight (an amount such that the number of SiH groups per unsaturated group on the Keltan® 2650 becomes 0.5), and a 1,3-divinyl-1,1,3,3-tetramethyldisiloxane complex of chloroplatinic acid in an amount such that the level of platinum with respect to the Keltan® 2650 becomes 5 ppm. Next, 30 parts by weight of Inhance UH-1045 (an ultra-high-molecular-weight polyethylene having an average particle size of 300 µm and a melting point of 136°C; available from Fluoro-Seal) was blended into 100 parts by weight of the mixture using a two-roll mill. Two parts by weight of the peroxide-based vulcanizing agent C-11A (Shin-Etsu Chemical Co., Ltd.) was then added to 100 parts by weight of the mixture and uniformly blended therein. The resulting mixture was designated as "Composition 14."

Test sheets were produced by press-curing the resulting Compositions 1 to 14 for 20 minutes at 150 kgf/cm² and 185°C, and subsequently subjecting the press-cured compositions to 2 hours of secondary vulcanization at 150°C.

### [Elongation at Break and Tensile Strength]

The resulting test sheets were punched into JIS K 6251 No. 3-shaped dumbbells, and the Strograph VG5E (Toyo Seiki Co., Ltd.) was used to measure the elongation at break and tensile strength of the test sheets in accordance with JIS K 6251: 2010. The results are shown in Table 1 (Examples) and Table 2 (Comparative Examples).

### [Dynamic Coefficient of Friction]

The dynamic coefficients of friction at the surfaces of the resulting test sheets were measured with the Type 14D Surface Property Tester from Shinto Scientific Co., Ltd. The results are shown in Table 1 (Examples) and Table 2 (Comparative Examples).

### [Blocking Resistance]

A test of the blocking resistance was performed under the following conditions. The results are shown in Table 1 (Examples) and Table 2 (Comparative Examples).

The test sheet was cut to a size of 5 mm × 50 mm and attached to a stainless steel sheet with double-sided tape. The specimen was placed against glass that had been washed with a neutral household cleanser, water was allowed to soak in at the interface and the specimen was secured with clips. This specimen was then left at rest for 60 minutes in a thermostatic chamber at a temperature of 60°C, following which it was taken out of the chamber and cooled by leaving it to stand at room temperature for at least 30 minutes. The clips were removed from the cooled specimen and, with the glass sheet in a fixed state, the stainless steel sheet was pulled in the direction of shear and the load at which the stainless steel sheet began to move was measured with a push-pull gauge (spring scale).

### [Abrasion Resistance]

The abrasion resistance test was carried out in accordance with JIS K 6264-2: 2005 using a CS-17 abrading wheel and under abrasion conditions of 9.8 N × 1,000 cycles. Using the weight of the test sheet prior to abrasion as the reference, the weight of the test sheet following abrasion was measured and the amount of wear (mg) by the sheet was determined. The results are shown in Table 1 (Examples) and Table 2 (Comparative Examples).

**[Table 1]**

| | Example | | | | | | | | |
|---|---|---|---|---|---|---|---|---|---|
| | 1 | 2 | 3 | 4 | 5 | 6 | 7 | 8 | 9 |
| Composition No. | Composition 1 | Composition 2 | Composition 3 | Composition 4 | Composition 5 | Composition 6 | Composition 7 | Composition 8 | Composition 9 |
| Elongation at break (%) | 110 | 110 | 100 | 230 | 270 | 220 | 170 | 100 | 270 |
| Tensile strength (MPa) | 4.6 | 4.8 | 4.6 | 3.8 | 5.4 | 3.3 | 2.8 | 4.0 | 3.5 |
| Dynamic coefficient of friction (µk) | 0.24 | 0.25 | 0.29 | 0.17 | 0.19 | 0.18 | 0.18 | 0.24 | 0.29 |
| Blocking resistance (N) | 40 | 60 | 55 | 30 | 30 | 30 | 35 | 45 | 35 |
| Abrasion resistance (mg) | 400 | 300 | 400 | 100 | 120 | 100 | 200 | 300 | 100 |

**[Table 2]**

| | Comparative Example | | | | |
|---|---|---|---|---|---|
| | 1 | 2 | 3 | 4 | 5 |
| Composition No. | Composition 10 | Composition 11 | Composition 12 | Composition 13 | Composition 14 |
| Elongation at break (%) | 50 | 100 | 130 | 600 | 30 |
| Tensile strength (MPa) | 3.8 | 4.7 | 8.2 | 9.2 | 7.2 |
| Dynamic coefficient of friction (µk) | 0.54 | 0.42 | 0.26 | 0.32 | 0.39 |
| Blocking resistance (N) | 60 | 70 | 90 | 45 | 50 |
| Abrasion resistance (mg) | 450 | 260 | 120 | 5 | 200 |

## Claims

1. A polyolefin-based rubber composition comprising:
(A) 100 parts by weight of an ethylene-α-olefin-unconjugated polyene random copolymer;
(B) from 1 to 100 parts by weight of an organopolysiloxane which has a degree of polymerization of at least 20, is represented by average compositional formula (1) below and includes 0 or 1 to 3 alkenyl groups per molecule
RₐSiO_{(4-a)/2} (1)
(wherein R represents like or unlike monovalent hydrocarbon groups, and the subscript 'a' is a positive number from 1.95 to 2.05);
(C) from 10 to 100 parts by weight of a reinforcing silica having a specific surface area as determined by the BET method of at least 50 m²/g, per 100 parts by weight of components (A) and (B) combined; and
(D) from 1 to 150 parts by weight of organic resin particles or inorganic particles selected from at least one of (D-1) to (D-3) below and having an average particle size of from 1 to 200 µm
(D-1) organic resin particles having a melting point of from 80 to 250°C,
(D-2) inorganic particles having a Mohs hardness of 8 or less,
(D-3) at least one type of silicone powder particle selected from the group consisting of silicone rubber powders, silicone resin powders, and silicone composite powders having a structure in which the surface of a silicone rubber powder is covered with a silicone resin.

2. The polyolefin-based rubber composition of claim 1 wherein, in formula (1) of the organopolysiloxane serving as component (B), R is a group selected from among alkyl groups of 1 to 8 carbon atoms and aryl groups of 6 to 12 carbon atoms, and the organopolysiloxane has 0 alkenyl groups.

3. The polyolefin-based rubber composition of claim 1 or 2, further comprising (E) a crosslinking agent which is a combination of an organohydrogenpolysiloxane and an addition reaction catalyst, and/or an organic peroxide.

4. The polyolefin-based rubber composition of any one of claims 1 to 3, further comprising a hydrocarbon-based synthetic oil.

5. The polyolefin-based rubber composition of any one of claims 1 to 4, wherein the rubber composition, when cured, has a surface friction coefficient of 0.3 or less.

6. The polyolefin-based rubber composition of any one of claims 1 to 5, wherein the rubber composition, when cured, is used in an automotive weatherstripping member or an automotive windshield wiper member.
